(19) Europäisches Patentamt
European Patent Office
Office européen des brevets

(11) EP 3 984 374 B1

(12) EUROPEAN PATENT SPECIFICATION

(45) Date of publication and mention of the grant of the patent:
**19.08.2026 Bulletin 2026/34**

(21) Application number: **20817175.1**

(22) Date of filing: **12.06.2020**

(51) International Patent Classification (IPC):
***A23K 20/142*** *(2016.01)* ***A23K 50/30*** *(2016.01)*

(52) Cooperative Patent Classification (CPC):
**A23K 50/30; A23K 20/142**

(86) International application number:
**PCT/JP2020/023245**

(87) International publication number:
**WO 2020/251029 (17.12.2020 Gazette 2020/51)**

# (54) METHOD FOR REARING PIGS

VERFAHREN ZUR AUFZUCHT VON SCHWEINEN

PROCÉDÉ D'ÉLEVAGE DE PORCS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.06.2019 JP 2019110337**

(43) Date of publication of application:
**20.04.2022 Bulletin 2022/16**

(73) Proprietor: **Ajinomoto Co., Inc.**
**Tokyo 104-8315 (JP)**

(72) Inventors:
- **TAKIMOTO, Tetsuya**
  **Kanagawa 2108681 (JP)**
- **SUSA, Yuko**
  **Kanagawa 2108681 (JP)**

(74) Representative: **Strehl & Partner mbB**
**Maximilianstrasse 54**
**80538 München (DE)**

(56) References cited:
**WO-A1-2005/018315**
**AU-A1- 2017 211 790**
**CN-A- 105 532 568**
**CN-A- 108 419 938**
**CN-A- 108 419 938**
**JP-A- 2008 011 732**
**JP-A- 2019 503 190**
**US-A1- 2002 004 096**
**US-A1- 2007 092 599**

- **YUMING WANG ET AL: "Advances in low-protein diets for swine", JOURNAL OF ANIMAL SCIENCE AND BIOTECHNOLOGY, BIOMED CENTRAL LTD, LONDON, UK, vol. 9, no. 1, 19 July 2018 (2018-07-19), pages 1 - 14, XP021258607, DOI: 10.1186/S40104-018-0276-7**
- **SURYAWAN AGUS ET AL: "Enteral leucine supplementation increases protein synthesis in skeletal and cardiac muscles and visceral tissues of neonatal pigs through mTORC1-dependent pathways", vol. 71, no. 1-4, 15 February 2012 (2012-02-15), US, pages 324 - 331, XP093021931, ISSN: 0031-3998, Retrieved from the Internet <URL:http://www.nature.com/articles/pr201179> DOI: 10.1038/pr.2011.79**
- **MANJARÍN RODRIGO ET AL: "Short- and long-term effects of leucine and branched-chain amino acid supplementation of a protein- and energy-reduced diet on muscle protein metabolism in neonatal pigs", AMINO ACIDS, SPRINGER VERLAG, AU, vol. 50, no. 7, 4 May 2018 (2018-05-04), pages 943 - 959, XP036528419, ISSN: 0939-4451, [retrieved on 20180504], DOI: 10.1007/S00726-018-2572-0**
- **LI QINGYUN ET AL: "Factors involved in the regulation of feed and energy intake of pigs", ANIMAL FEED SCIENCE AND TECHNOLOGY, ELSEVIER, AMSTERDAM, NL, vol. 233, 6 January 2016 (2016-01-06), pages 22 - 33, XP085305356, ISSN: 0377-8401, DOI: 10.1016/J.ANIFEEDSCI.2016.01.001**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 984 374 B1

## Description

### TECHNICAL FIELD

The present invention relates to a method for raising pigs. More particularly, the present invention relates to a method for raising pigs, and a method for increasing the uniformity of the body weights in one or more pig groups, and a feed additive for pigs, a feed composition for pigs, and a method for producing the same.

### BACKGROUND ART

As a problem in raising pigs, various troubles occurring before birth of pigs or during the juvenile stage after birth are exemplified. Above all, the body weight of pigs is directly connected to sales and is commercially very important, and therefore, a problem regarding the body weight of pigs such that the body weight gain does not increase was serious for pig farmers.

Heretofore, various studies have been conducted for increasing the body weight gain of pigs. For example, NPL 1 indicates that an effect of leucine that affects a molecular mechanism for controlling protein synthesis and degradation in skeletal muscles on piglets having a low body weight due to intrauterine growth retardation was examined, and the daily average body weight gain and the daily average feed intake were increased by leucine.

AU 2017 211 790 A1 discloses a food for pigs containing high amounts of branched-chain amino acids.

YUMING WANG ET AL: "Advances in low-protein diets for swine", JOURNAL OF ANIMAL SCIENCE AND BIOTECHNOLOGY, BIOMED CENTRAL LTD, LONDON, UK, vol. 9, no. 1, 19 July 2018, pages 1-14, discloses that supplementation with branched-chain amino acids can increase growth performance in piglets.

CN 108 419 938 A discloses a food for weaned pigs comprising branched-chain amino acids.

CN 105 532 568 A teaches that supplementation with branched-amino acids can improve the growth performance of weaned piglets.

### CITATION LIST

### NON PATENT LITERATURE

NPL 1: Wen Xu M. D. "Leucine improves growth performance of intrauterine growth retardation piglets by modifying gene and protein expression related to protein synthesis" Nutrition 32 (2016) 114-121

### SUMMARY OF INVENTION

### TECHNICAL PROBLEM

As for the reason why the body weight gain of pigs does not increase, in addition to the congenital causes as described above, acquired causes due to various stresses occurring after birth are greatly involved.

As the stresses, for example, those caused by switching to solid feed from mother's milk, diarrhea or various infectious diseases, environmental changes, close rearing, or the like are exemplified. These cause a decrease in feed intake of pigs and become a factor to delay the growth. Then, a problem of so-called "kuimake in Japanese", which means that a pig whose growth is slow is deprived of feed to be ingested by a pig whose growth is fast, was caused.

In dealing with such a problem, it is necessary to change feed to be given according to a difference in growth, and a necessity that a group of pigs whose growth is fast and a group of pigs whose growth is slow are separately raised has occurred.

However, to divide the domestic pig group increases cost and labor burden. Further, also from the viewpoint of animal welfare, creation of a system of evenly supplying feed to pigs has been socially required, and a raising method capable of raising pigs without dividing the pig group has been demanded. In this manner, an object of pig farmers is to raise pigs so that the body weight in a pig group becomes uniform even if pigs are raised without being divided into groups in the pig group immediately after weaning.

In view of this, the present invention provides a method for raising pigs for achieving the above object.

### SOLUTION TO PROBLEM

The present inventors made intensive studies in order to achieve the above object, and as a result, they found that by allowing feed containing specific amino acids in specific amounts to be ingested continually for a specific period in one or more pig groups composed of a plurality of pigs immediately after weaning, the uniformity of the body weights in the pig

groups can be increased, and thus, completed the present invention.

The present invention is defined in the appended claims.

ADVANTAGEOUS EFFECTS OF INVENTION

According to a method for raising pigs of an embodiment of the present invention, the uniformity of the body weights in one or more pig groups can be increased. As a result, it becomes possible to raise pigs in one group without dividing the pig group.

BRIEF DESCRIPTION OF DRAWINGS

[FIG. 1] FIG. 1(A) is a graph showing the distribution of the body weights at weaning in each section in Example 1, and FIG. 1(B) is a graph showing the distribution of the body weights on day 35 after weaning in Example 1.

[FIG. 2] FIG. 2 is a graph showing a change in the degree of separation (ΔS) of the body weights in each section in Example 1.

[FIG. 3] FIG. 3 is a graph showing the distribution of the body weights on day 28 after weaning in each section in Example 2.

[FIG. 4] FIG. 4 is a graph showing a change in the degree of separation (ΔS) of the body weights in each section in Example 2.

DESCRIPTION OF EMBODIMENTS

Hereinafter, specific embodiments of the present invention will be described in detail.

The embodiments of the invention are restricted to the subject-matter of the claims.

The number of pigs in the pig group composed of a plurality of pigs immediately after weaning is not particularly limited as long as it is 2 or more, and can be appropriately set according to the raising environment for the pigs. From the viewpoint that the effect of the present invention of increasing the uniformity of the body weights in the pig group is further obtained, it is preferably 20 or more, more preferably 100 or more, and further more preferably 500 or more.

As the average body weight of the plurality of pigs immediately after weaning, for example, 1 kg or more and less than 5 kg, 5 kg or more and less than 7 kg, 7 kg or more and less than 11 kg, 11 kg or more and less than 25 kg, and the like are exemplified. From the viewpoint that the effect of the present invention of reducing the degree of separation of the body weights in the pig group is further obtained, it is preferably in a range of 1 kg or more and less than 20 kg, more preferably in a range of 3 kg or more and less than 15 kg, and further more preferably in a range of 5 kg or more and less than 11 kg.

The branched-chain amino acids in the embodiment of the present invention means three types of amino acids: leucine, valine, and isoleucine. That is, the phrase "to contain branched-chain amino acids in an amount 1.7 times or more the required amount per feed specified by NRC (2012)" means that the total amount of the three types of amino acids: leucine, valine, and isoleucine are contained in an amount 1.7 times or more the sum of the required amounts of leucine, valine, and isoleucine per feed specified by NRC (2012).

Then, the required amounts of leucine, valine, and isoleucine per feed specified by NRC (2012) are required amounts specified by "Table 16-1 A Dietary Calcium, Phosphorus, and Amino Acid Requirements of Growing Pigs When Allowed Feed Ad Libitum (90% dry matter)" in "the National Research Council Nutrient Requirements of Swine, Eleventh Revised Edition (2012)" (NRC (2012)). The required amounts are shown in the following Table 1.

[Table 1]

Table 1

| Standardized ideal digestible basis (%, 90% dry matter) | | | |
|---|---|---|---|
| | Body Weight Range (kg) | | |
| AA | 5-7 | 7-11 | 11-25 |
| Isoleucine | 0.77 | 0.69 | 0.63 |
| Leucine | 1.50 | 1.35 | 1.23 |

(continued)

| Standardized ideal digestible basis (%, 90% dry matter) | | | |
|---|---|---|---|
| | Body Weight Range (kg) | | |
| Lysine | 1.50 | 1.35 | 1.23 |
| Valine | 0.95 | 0.86 | 0.78 |
| Total BCAA | 3.22 | 2.90 | 2.64 |

The present inventors surprisingly found for the first time, that the uniformity of the body weight in one or more pig groups can be increased by allowing feed designed so as to contain branched-chain amino acids in an amount 1.7 times or more the required amount per feed specified in the above Table 1 to be ingested continually for 2 weeks or more immediately after weaning.

The phrase "the uniformity of the body weights in one or more pig groups is increased" means that a variation in the body weight in one or more pig groups is decreased as described later. For example, it refers to decreasing a variation in the body weight in a pig group by increasing the body weight gain of an individual whose body weight is relatively low as compared with the body weight gain of an individual whose body weight is relatively high in the pig group.

The feed is preferably designed so as to contain the branched-chain amino acids in an amount 1.9 times or more, and more preferably 2.0 times or more the required amount per feed specified in the above Table 1. Further, when the content of the branched-chain amino acids is too high, the balance of amino acids may be disturbed to decrease the productivity of an individual pig. Therefore, the feed is preferably designed so as to contain the branched-chain amino acids in an amount 4.0 times or less, and more preferably 3.0 times or less the required amount per feed specified in the above Table 1.

Here, the "body weight" in Table 1 shall mean the average body weight in the pig group at the time point immediately after weaning and when ingestion of the feed in this embodiment is started. Note that even when the average body weight has increased during the period in which the feed is ingested, the intake shall be calculated based on the above average body weight.

Specifically, for example, even if the average body weight in the pig group at the time point immediately after weaning and when ingestion of the feed in this embodiment is started is about 7 kg, and thereafter the average body weight in the pig group has increased to about 12 kg during the period in which the feed in this embodiment is ingested, the content of the branched-chain amino acids in the feed shall be determined by applying the numerical value in the column "7-11" (kg) instead of applying the numerical value in the column "11-25" (kg) as the body weight in Table 1 during the period in which the feed in this embodiment is ingested.

Note that in Table 1, "5-7" (kg) denotes 5 kg or more and less than 7 kg, "7-11" (kg) denotes 7 kg or more and less than 11 kg, and "11-25" (kg) denotes 11 kg or more and less than 25 kg.

As shown in Table 1, for example, when the average body weight of pigs immediately after weaning is 5 kg or more and less than 7 kg, the contents (required amounts) of leucine, valine, and isoleucine with respect to a feed composition are 1.50 mass%, 0.95 mass%, and 0.77 mass%, respectively, and the required amount as the branched-chain amino acids becomes 3.22 mass% which is obtained by summing up these. Therefore, in this embodiment, when the average body weight of pigs immediately after weaning is 5 kg or more and less than 7 kg, it is necessary that the feed designed so as to contain the branched-chain amino acids in an amount of 5.47 mass% or more (1.7 times or more) is ingested. The amount is preferably 6.12 mass% or more (1.9 times or more), and more preferably 6.44 mass% or more (2.0 times or more).

When the average body weight of pigs immediately after weaning is 5 kg or more and less than 7 kg, feed containing preferably leucine in an amount of 2.55 mass% or more (1.7 times or more), more preferably leucine in an amount of 2.85 mass% or more (1.9 times or more), and further more preferably leucine in an amount of 3.00 mass% or more (2.0 times or more) is ingested.

Further, when the average body weight of pigs immediately after weaning is 5 kg or more and less than 7 kg, feed containing preferably valine in an amount of 1.62 mass% or more (1.7 times or more), more preferably valine in an amount of 1.81 mass% or more (1.9 times or more), and further more preferably valine in an amount of 1.90 mass% or more (2.0 times or more) is ingested.

Further, when the average body weight of pigs immediately after weaning is 5 kg or more and less than 7 kg, feed containing preferably isoleucine in an amount of 1.31 mass% or more (1.7 times or more), more preferably isoleucine in an amount of 1.46 mass% or more (1.9 times or more), and further more preferably isoleucine in an amount of 1.54 mass% or more (2.0 times or more) is ingested.

Further, for example, when the average body weight of pigs immediately after weaning is 7 kg or more and less than 11 kg, the contents (required amounts) of leucine, valine, and isoleucine with respect to a feed composition are 1.35 mass%, 0.86 mass%, and 0.69 mass%, respectively, and the required amount as the branched-chain amino acids

becomes 2.90 mass% which is obtained by summing up these. Therefore, in this embodiment, when the average body weight of pigs immediately after weaning is 7 kg or more and less than 11 kg, it is necessary that the feed containing the branched-chain amino acids in an amount of 4.93 mass% or more (1.7 times or more) is ingested. The amount is preferably 5.51 mass% or more (1.9 times or more), and more preferably 5.80 mass% or more (2.0 times or more).

When the average body weight of pigs immediately after weaning is 7 kg or more and less than 11 kg, feed containing preferably leucine in an amount of 2.30 mass% or more (1.7 times or more), more preferably leucine in an amount of 2.57 mass% or more (1.9 times or more), and further more preferably leucine in an amount of 2.70 mass% or more (2.0 times or more) is ingested.

Further, when the average body weight of pigs immediately after weaning is 7 kg or more and less than 11 kg, feed containing preferably valine in an amount of 1.46 mass% or more (1.7 times or more), more preferably valine in an amount of 1.63 mass% or more (1.9 times or more), and further more preferably valine in an amount of 1.72 mass% or more (2.0 times or more) is ingested.

Further, when the average body weight of pigs immediately after weaning is 7 kg or more and less than 11 kg, feed containing preferably isoleucine in an amount of 1.17 mass% or more (1.7 times or more), more preferably isoleucine in an amount of 1.31 mass% or more (1.9 times or more), and further more preferably isoleucine in an amount of 1.38 mass% or more (2.0 times or more) is ingested.

Further, for example, when the average body weight of pigs immediately after weaning is 11 kg or more and less than 25 kg, the required amounts of leucine, valine, and isoleucine with respect to a feed composition are 1.23 mass%, 0.78 mass%, and 0.63 mass%, respectively, and the required amount as the branched-chain amino acids becomes 2.64 mass% which is obtained by summing up these. Therefore, in this embodiment, when the average body weight of pigs immediately after weaning is 11 kg or more and less than 25 kg, it is necessary that the feed containing the branched-chain amino acids in an amount of 4.49 mass% or more (1.7 times or more) is ingested. The amount is preferably 5.02 mass% or more (1.9 times or more), and more preferably 5.28 mass% or more (2.0 times or more).

When the average body weight of pigs immediately after weaning is 11 kg or more and less than 25 kg, feed containing preferably leucine in an amount of 2.09 mass% or more (1.7 times or more), more preferably leucine in an amount of 2.34 mass% or more (1.9 times or more), and further more preferably leucine in an amount of 2.46 mass% or more (2.0 times or more) is ingested.

Further, when the average body weight of pigs immediately after weaning is 11 kg or more and less than 25 kg, feed containing preferably valine in an amount of 1.33 mass% or more (1.7 times or more), more preferably valine in an amount of 1.48 mass% or more (1.9 times or more), and further more preferably valine in an amount of 1.56 mass% or more (2.0 times or more) is ingested.

Further, when the average body weight of pigs immediately after weaning is 11 kg or more and less than 25 kg, feed containing preferably isoleucine in an amount of 1.07 mass% or more (1.7 times or more), more preferably isoleucine in an amount of 1.20 mass% or more (1.9 times or more), and further more preferably isoleucine in an amount of 1.26 mass% or more (2.0 times or more) is ingested.

Further, the present inventors found, that the uniformity of the body weights in one or more pig groups can be increased also by allowing feed designed so as to contain branched-chain amino acids in an amount 1.0 times or more the required amount per feed specified in the above Table 1, and contain leucine in an amount 1.6 times or more the amount of valine, and 2.0 times or more the amount of isoleucine to be ingested continually for 2 weeks or more immediately after weaning. The absorption of valine and isoleucine competes with the absorption of leucine, and therefore, it is considered that by limiting the contents of valine and isoleucine within the above ranges, the absorption of leucine is improved, so that the above effect is obtained.

In the second aspect, the feed is preferably designed so as to contain the branched-chain amino acids in an amount 1.1 times or more the required amount specified in the above Table 1. Further, when the content of the branched-chain amino acids is too high, the balance of amino acids may be disturbed to decrease the productivity of an individual pig. Therefore, the feed is preferably designed so as to contain the branched-chain amino acids in an amount 4.0 times or less, and more preferably 3.0 times or less the required amount specified in the above Table 1.

Further, in the second aspect, leucine is contained in an amount preferably 1.7 times or more, and more preferably 1.8 times or more the amount of valine. Further, when the content of leucine is too high, the balance of amino acids may be disturbed to decrease the productivity of an individual pig, and therefore, leucine is contained in an amount preferably 4.0 times or less, and more preferably 3.0 times or less the amount of valine.

Further, leucine is contained in an amount preferably 2.1 times or more, and more preferably 2.2 times or more the amount of isoleucine. Further, when the content of leucine is too high, the balance of amino acids may be disturbed to decrease the productivity of an individual pig, and therefore, leucine is contained in an amount preferably 4.0 times or less, and more preferably 3.0 times or less the amount of isoleucine.

As shown in the above Table 1, for example, when the average body weight of pigs immediately after weaning is 5 kg or more and less than 7 kg, the contents (required amounts) of leucine, valine, and isoleucine with respect to a feed composition are 1.50 mass%, 0.95 mass%, and 0.77 mass%, respectively, and the required amount as the branched-

chain amino acids becomes 3.22 mass% which is obtained by summing up these. Therefore, in this embodiment, when the average body weight of pigs immediately after weaning is 5 kg or more and less than 7 kg, it is necessary that the feed designed so as to contain the branched-chain amino acids in an amount of 3.22 mass% or more (1.0 times or more), and contain leucine in an amount 1.6 times or more the amount of valine, and 2.0 times or more the amount of isoleucine is ingested. The content of the branched-chain amino acids is preferably 3.54 mass% or more (1.1 times or more).

Further, for example, when the average body weight of pigs immediately after weaning is 7 kg or more and less than 11 kg, the contents (required amounts) of leucine, valine, and isoleucine with respect to a feed composition are 1.35 mass%, 0.86 mass%, and 0.69 mass%, respectively, and the required amount as the branched-chain amino acids becomes 2.90 mass% which is obtained by summing up these. Therefore, in this embodiment, when the average body weight of pigs immediately after weaning is 7 kg or more and less than 11 kg, it is necessary that the feed designed so as to contain the branched-chain amino acids in an amount of 2.90 mass% or more (1.0 times or more), and contain leucine in an amount 1.6 times or more the amount of valine, and 2.0 times or more the amount of isoleucine is ingested. The content of the branched-chain amino acids is preferably 3.19 mass% or more (1.1 times or more).

Further, for example, when the average body weight of pigs immediately after weaning is 11 kg or more and less than 25 kg, the required amounts of leucine, valine, and isoleucine with respect to a feed composition are 1.23 mass%, 0.78 mass%, and 0.63 mass%, respectively, and the required amount as the branched-chain amino acids becomes 2.64 mass% which is obtained by summing up these. Therefore, in this embodiment, when the average body weight of pigs immediately after weaning is 11 kg or more and less than 25 kg, it is necessary that the feed containing the branched-chain amino acids in an amount of 2.64 mass% or more (1.0 times or more), and containing leucine in an amount 1.6 times or more the amount of valine, and 2.0 times or more the amount of isoleucine is ingested. The content of the branched-chain amino acids is preferably 2.90 mass% or more (1.1 times or more).

Further, in the second aspect, the feed is preferably designed so as to contain leucine in an amount 1.05 times or more, and more preferably 1.1 times or more the required amount specified in the above Table 1. Further, when the content of leucine is too high, the balance of amino acids may be disturbed to decrease the productivity of an individual pig, and therefore, leucine is preferably contained in an amount 2 times or less the required amount.

Further, in the second aspect, the feed is preferably designed so as to contain valine in an amount 1.0 times or more the required amount specified in the above Table 1. Further, when the content of valine is too high, the balance of amino acids may be disturbed to decrease the productivity of an individual pig, and therefore, valine is preferably contained in an amount 2 times or less the required amount.

Further, in the second aspect, the feed is preferably designed so as to contain isoleucine in an amount 1.0 times or more the required amount specified in the above Table 1. Further, when the content of isoleucine is too high, the balance of amino acids may be disturbed to decrease the productivity of an individual pig, and therefore, isoleucine is preferably contained in an amount 2 times or less the required amount.

In the method for raising pigs of the present invention, the amount of the feed composition to be supplied to the pig group immediately after weaning until 35 days after weaning in order to obtain the effect of the present invention is generally 400 g/pig/day or more and 800 g/pig/day or less.

In the method for raising pigs of this embodiment, in the first aspect of the present invention, it is important that pigs immediately after weaning are allowed to ingest feed designed so as to contain branched-chain amino acids in an amount 1.7 times or more the above required amount continually for 2 weeks or more immediately after weaning. Alternatively, in the second aspect of the present invention, it is important that pigs immediately after weaning are allowed to ingest feed designed so as to contain branched-chain amino acids in an amount 1.0 times or more the above required amount, and contain leucine in an amount 1.6 times or more the amount of valine, and 2.0 times or more the amount of isoleucine continually for 2 weeks or more immediately after weaning. By doing this, it becomes possible to increase the uniformity of the body weight in the one or more pig groups.

The "pig immediately after weaning" as used herein refers to a pig within 10 days after weaning. The "weaning" refers to separating a piglet from the mother and shifting (or switching) the raising mainly on milk to raising mainly on food (livestock feed or the like) other than milk. It is preferably a pig within 7 days after weaning, more preferably within 5 days after weaning, and further more preferably on the day of weaning (0 days after weaning). Further, the phrase "ingested continually for 2 weeks or more immediately after weaning" means that the day when the feed is first ingested within 7 days after weaning is defined as day 1, and the feed is ingested every day in a period from day 1 to week 2 (day 14) and thereafter.

The weaning stage of the pig in the present invention, that is, the age of the pig at weaning is not particularly limited, but is generally 21 days or older and 28 days or younger.

As for the intake period of the feed in the present invention, the feed is preferably ingested continually for 2 weeks or more, and more preferably ingested continually for 3 weeks or more immediately after weaning. Further, the upper limit of the intake period of the feed in the present invention is preferably 5 weeks or less, more preferably 4 weeks or less.

The daily feeding frequency for pigs is not particularly limited as long as the above daily intake is satisfied. The feeding mode is generally ad libitum feeding. The ad libitum feeding refers to a feeding method in which pigs are brought

into a state where the pigs can always ingest the feed.

Further, in the method for raising pigs in the present invention, it is preferred that, in the one or more pig groups composed of a plurality of pigs immediately after weaning, feed in which the ratio (mass ratio) of the content of leucin to the content of lysine (Leu/Lys) is 1.15 or more is ingested continually for 2 weeks or more immediately after weaning.

According to the above Table 1, the ratio (mass ratio) of the required amount of leucin to the required amount of lysine (Leu/Lys) per feed specified by NRC (2012) is 1, however, by setting the ratio (mass ratio) of leucin to lysine (Leu/Lys) to 1.15 or more, the uniformity of the body weight in the one or more pig groups can be further increased.

The ratio (mass ratio) of leucin to lysine (Leu/Lys) is more preferably 1.3 or more, and further more preferably 2.0 or more.

In the present invention, the uniformity of the body weights in the one or more pig groups can be evaluated by determining the "degree of separation" of the body weights in the pig groups. The degree of separation of the body weight in the pig group refers to, when the pig group to be raised is divided into two pig groups: one or more pig groups in which the body weight at weaning is higher than the average body weight (H group) and one or more pig groups in which the body weight at weaning is lower than the average body weight (L group), the degree of difference in the average body weight between the H group and the L group (the degree of separation of the average body weight) at a certain time point after weaning. A smaller degree of separation means higher uniformity of the body weights in the entire pig group.

Specifically, an increase or decrease of the degree of separation of the body weight between the H group and the L group can be ascertained by defining the ratio of the average body weight in the L group to the average body weight in the H group at a certain time point after the start of supply of the feed in the present invention as the degree of separation S, and determining the difference in the degree of separation S ($\Delta$S) at two arbitrary time points after the start of supply of the feed in the present invention. The degree of separation S and $\Delta$S are as shown in the following formulae.

· S (degree of separation) = average body weight in H group/average body weight in L group
· $\Delta$S (difference in degree of separation S) = S (former) - S (latter)

The S (former) means the degree of separation at an arbitrary time point after the start of supply of the feed in the present invention, and the S (latter) means the degree of separation at an arbitrary time point after the start of supply of the feed in the present invention and also at a time point after the time point of the S (former). The S (former) is, for example, the degree of separation S at the time point when supply of the feed in the present invention is started, and the S (latter) is, for example, the degree of separation S after 35 days from the start of supply of the feed in the present invention.

It is indicated that as S approaches 1, the difference in the average body weights between the group in which the body weight is high (H group) and the group in which the body weight is low (L group) becomes smaller. Then, it is indicated that as $\Delta$S is larger, the uniformity of the body weights in the pig group is increased. That is, the pig group approaches a group in which the body weights are uniform.

S is preferably 1.4 or less, more preferably 1.3 or less, further more preferably 1.25 or less, and most preferably 1. Further, S is 1 or more.

In addition, $\Delta$S [the degree of separation S at the time point when supply of the feed in the present invention is started - the degree of separation S after 35 days from the start of supply of the feed in the present invention] is preferably 0.1 or more, more preferably 0.15 or more, and further more preferably 0.2 or more.

Further, $\Delta$S [the degree of separation S at the time point when supply of the feed in the present invention is started - the degree of separation S after 21 days from the start of supply of the feed in the present invention] is preferably 0.1 or more.

Further, there is feed efficiency of pigs as an indicator that indicates how much the body weight of a pig with respect to a given amount of the feed ingested by the pig has increased. The feed efficiency can be calculated by dividing the body weight gain by the feed intake (feeding amount) as shown in the following formula.

$$\text{feed efficiency} = \text{body weight gain (g)/feed intake (g)}$$

The feed efficiency is preferably 0.50 or more, more preferably 0.65 or more, and further more preferably 0.80 or more.

In the method for raising pigs of the present invention, a specific method for designing the feed containing the specific amino acids in the specific amounts is not particularly limited. For example, a method in which a feed composition for pigs is prepared so that the total amount of the branched-chain amino acids or the content of each of leucine, valine, and isoleucine becomes a specific amount by adding a predetermined amount of the feed additive for pigs to an existing feed raw material for livestock is exemplified. Further, a method in which a feed composition for pigs is prepared from the beginning so that the total amount of the branched-chain amino acids or the content of each of leucine, valine, and isoleucine becomes a specific amount is exemplified.

As for the feed additive for pigs, for example, a feed additive for pigs can be designed for each existing feed raw material for livestock so that the total amount of the branched-chain amino acids or the content of each of leucine, valine, and isoleucine in the entire feed composition for pigs with respect to the feed raw material becomes a specific amount.

Specifically, for example, by referring to the total amount of the branched-chain amino acids or the content of each of leucine, valine, and isoleucine in various types of existing feed raw materials described in Standard tables of feed composition in Japan (2009) edited by National Agricultural and Food Research Organization, Japan Livestock Industry Association, or the like, or by individually measuring the total amount of the branched-chain amino acids or the content of each of leucine, valine, and isoleucine in various types of feed raw materials, the contents in these various types of feed raw materials are ascertained. After that, the feed additive for pigs can be designed so that the total amount of the branched-chain amino acids or the content of each of leucine, valine, and isoleucine in the feed composition becomes a specific amount. Note that the existing feed raw material may be single feed or mixed feed prepared by mixing two or more types of feed.

The feed raw material and the feed additive are not particularly limited, but, raw materials, for example, grains such as corn, barley, wheat, rye, sorghum, soybeans, and soybean flour, soybean oil cakes, soy protein, oils and fats, skim milk, fish meal, meat and bone meal, blood meal, plasma protein, whey, rice bran, wheat bran, saccharides such as sugar or other sweeteners, minerals, vitamins, table salt, and the like may be used alone or in combination.

In the feed additive and the feed composition, an excipient, an expander, a nutrition reinforcing agent, another feed additive, or the like can also be blended as long as the effect of the present invention is not impaired. As the excipient, for example, a cellulose derivative such as carboxymethyl cellulose is exemplified. As the expander, for example, dextrin, starch, and the like are exemplified. As the nutrition reinforcing agent, for example, vitamins and minerals are exemplified. As another feed additive, for example, an enzyme agent, a live bacterial agent, and the like are exemplified.

The method for producing the feed composition is not particularly limited, and the feed composition can be produced by mixing the feed additive for pigs for each existing feed raw material so that the total amount of the branched-chain amino acids or the content of each of leucine, valine, and isoleucine in the entire feed composition for pigs with respect to the feed raw material becomes a specific amount. In addition, the feed composition can be produced by mixing various types of feed so that the total amount of the branched-chain amino acids or the content of each of leucine, valine, and isoleucine in the entire composition becomes a specific amount from the beginning.

## EXAMPLES

Hereinafter, the present invention will be further described with reference to Examples, however, the invention is not limited to the following examples. The measurement of the respective items in Examples was carried out by the following methods.

[Average Body Weight (kg)]

The body weight of each individual was measured using a weighing scale for livestock, and an arithmetic mean was calculated for each group.

[Daily Body Weight Gain (g)]

The daily body weight gain was calculated by dividing the body weight gain for a given number of days by the number of days.

[Average Feed Intake (g)]

The intake was measured from a difference between the feeding amount and the residual feed amount for a given number of days. The intake was divided by the number of days and the number of pigs, whereby the daily average feed intake was calculated for each group.

[Feed Efficiency]

The daily body weight gain (g) was divided by the average feed intake (g), whereby the feed efficiency was calculated.

[Average Leu Intake (g)]

The Leu intake was measured from a difference between the feeding amount and the residual feed amount for a

given number of days. The intake was divided by the number of days and the number of pigs, whereby the daily average Leu intake was calculated for each group.

[Average BCAA Intake (g)]

The BCAA intake was measured from a difference between the feeding amount and the residual feed amount for a given number of days. The intake was divided by the number of days and the number of pigs, whereby the daily average BCAA intake was calculated for each group.

[Degree of Separation S]

In all pigs to be subjected to a test, the average body weight at the time point when supply of the feed of the present invention is started was determined, and the pigs were divided into H group in which the body weight is higher than the average body weight and L group in which the body weight is lower than the average body weight. The degree of separation S at each time point was determined according to the following formula.

S (degree of separation) = average body weight in H group/average body weight in L group

Example 1

In a pig group composed of 528 piglets at the age of 21 days at weaning (on day 0 after weaning: d0), the piglets were divided into two pig groups: a group composed of 264 piglets whose body weight is higher than the average body weight (H group) (6.84 ± 0.40 kg) and a group composed of 264 piglets whose body weight is lower than the average body weight (L group) (5.38 ± 0.43 kg). The average body weight of each group is 5 kg or more and less than 10 kg.

Subsequently, each of the H group and the L group were further divided into 6 sections: PC, T1, T2, T3, T4, and HC in total, and a feed composition was supplied in a different feeding mode for each section as follows (6 sections in total, each of which consists of 44 piglets (264 piglets), 11 piglets/pen, in each of the H group and the L group). The supply of the feed composition was carried out continually for 5 weeks in total (35 days) from weaning by adding the feed twice in the morning and evening while confirming the residual feed so that the feed does not run out.

The respective feed compositions and the feeding mode for each section are as follows.

[Feed Composition]

· Feed composition 1-1: containing BCAA in an amount 1 time the required amount specified by NRC (2012), Leu/Lys = 1.0

· Feed composition 1-2: containing BCAA in an amount 1.5 times the required amount specified by NRC (2012), Leu/Lys = 1.5

· Feed composition 1-3: containing BCAA in an amount 2.0 times the required amount specified by NRC (2012), Leu/Lys = 2.0

· Feed composition 1-4: containing essential amino acids in an amount 1.5 times the required amount specified by NRC (2012), Leu/Lys = 1.5

[Feeding Mode for Each Section]

· PC: a section in which the feed composition 1-1 was supplied for 2 weeks immediately after weaning (from day 0 after weaning), and the feed composition 1-1 was also supplied for the remaining 3 weeks

· T1: a section in which the feed composition 1-2 was supplied for 1 week immediately after weaning (from day 0 after weaning), and subsequently the feed composition 1-1 was supplied for 1 week, and the feed composition 1-1 was also supplied for the remaining 3 weeks

· T2: a section in which the feed composition 1-2 was supplied for 2 weeks immediately after weaning (from day 0 after weaning), and the feed composition 1-1 was supplied for the remaining 3 weeks

· T3: a section in which the feed composition 1-3 was supplied for 1 week immediately after weaning (from day 0 after weaning), and subsequently the feed composition 1-1 was supplied for 1 week, and the feed composition 1-1 was also supplied for the remaining 3 weeks

· T4 (the embodiment of the present invention): a section in which the feed composition 1-3 was supplied for 2 weeks immediately after weaning, and the feed composition 1-1 was supplied for the remaining 3 weeks
· HC: a section in which the feed composition 1-4 was supplied for 2 weeks immediately after weaning, and the feed composition 1-1 was supplied for the remaining 3 weeks

The formulations of the feed compositions 1-1 to 1-4 are shown in Table 2.

[Table 2]

Table 2

| | | | Feed composition 1-1 | Feed composition 1-2 | Feed composition 1-3 | Feed composition 1-4 |
|---|---|---|---|---|---|---|
| Maize | | % | 50 | 49 | 49 | 48 |
| Barley | | % | 18.05 | 17.83 | 17.61 | 17.51 |
| Soybean meal 48 | | % | 10.28 | 10.15 | 10.03 | 9.97 |
| Whey | | % | 10 | 10 | 10 | 10 |
| Lactose | | % | 5 | 5 | 5 | 5 |
| Soy oil | | % | 1.86 | 1.84 | 1.81 | 1.80 |
| MCP | | % | 1.67 | 1.65 | 1.63 | 1.62 |
| Calcium carbonate | | % | 0.89 | 0.88 | 0.87 | 0.86 |
| Sodium chloride | | % | 0.5 | 0.49 | 0.49 | 0.48 |
| Vitamin G Plus | | % | 0.4 | 0.40 | 0.39 | 0.39 |
| L-Lysine HCl | | % | 0.52 | 0.51 | 0.51 | 0.50 |
| L-Threonine | | % | 0.2 | 0.20 | 0.20 | 0.55 |
| DL-Methionine | | % | 0.22 | 0.22 | 0.21 | 0.54 |
| L-Tryptophan | | % | 0.09 | 0.09 | 0.09 | 0.20 |
| L-Isoleucine 92% | | % | 0.04 | 0.37 | 0.66 | 0.36 |
| L-Valine | | % | 0.17 | 0.57 | 0.95 | 0.56 |
| L-Leucine 98% | | % | 0 | 0.50 | 1.04 | 0.49 |
| L-Histidine 98% | | % | 0.05 | 0.05 | 0.05 | 0.21 |
| L-Phenylalanine | | % | 0.06 | 0.06 | 0.06 | 0.31 |
| L-Tyrosine | | % | 0 | 0.00 | 0.00 | 0.24 |
| L-Arginine HCL | | % | 0 | 0.00 | 0.00 | 0.34 |
| Total | | % | 100 | 100 | 100 | 100 |
| Lys | | % | 1.50 | 1.50 | 1.50 | 2.25 |
| BCAA | Leu | % | 1.50 | 2.25 | 3.00 | 2.25 |
| | Ile | % | 0.77 | 1.16 | 1.54 | 1.16 |
| | Val | % | 0.95 | 1.43 | 1.90 | 1.43 |
| BCAA | | % | 3.22 | 4.83 | 6.44 | 4.83 |
| BCAA/NRC (5-7 kg) | | - | 1.0 | 1.5 | 2.0 | 1.5 |
| Leu/Lys | | - | 1.0 | 1.5 | 2.0 | 1.0 |
| Ile/Lys | | - | 0.51 | 0.77 | 1.03 | 0.51 |

(continued)

| | | Feed composition 1-1 | Feed composition 1-2 | Feed composition 1-3 | Feed composition 1-4 |
|---|---|---|---|---|---|
| Val/Lys | - | 0.63 | 0.95 | 1.27 | 0.63 |

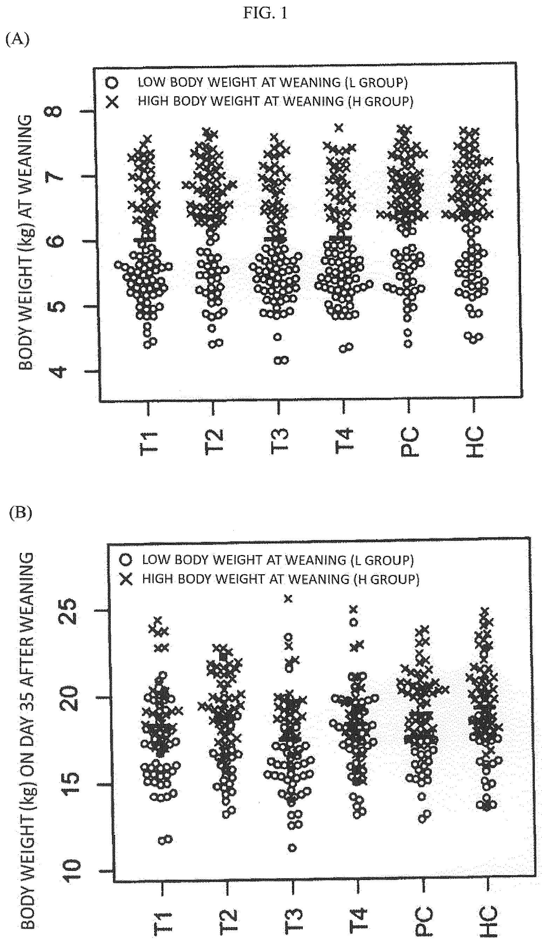

For each of the above sections, the body weight and the residual feed weight were measured at the respective time points: on day 0 (d0), day 7 (d7), day 14 (d14), and day 35 (d35) after weaning, and the average body weight, daily body weight gain, average feed intake, feed efficiency, average Leu intake, average BCAA intake, and degree of separation S were calculated. The results are shown in Table 3. Further, the distributions of the body weights at weaning (d0) and on day 35 after weaning (d35) in each section are shown in FIGS. 1(A) and (B), respectively.

[Table 3]

Table 3

| | | PC | T1 | T2 | T3 | T4 | HC |
|---|---|---|---|---|---|---|---|
| Average body weight (kg) | | | | | | | |
| On day 0 after weaning (d0) | Low body weight at weaning (L) | 5.4 | 5.4 | 5.3 | 5.4 | 5.4 | 5.4 |
| | High body weight at weaning (H) | 6.9 | 6.8 | 6.9 | 6.8 | 6.8 | 6.8 |
| On day 7 after weaning (d7) | L | 5.9[b] | 5.7[ab] | 5.7[ab] | 5.5[a] | 5.8[b] | 5.8[b] |
| | H | 7.3 | 7.2 | 7.2 | 7 | 7.1 | 7.1 |
| On day 14 after weaning (d14) | L | 6.9[ab] | 6.8[ab] | 6.7[ab] | 6.6[a] | 7.0[ab] | 7.1[b] |
| | H | 8.6 | 8.7 | 8.5 | 8.2 | 8.5 | 8.4 |
| On day 35 after weaning (d35) | L | 16.6 | 17.1 | 16.5 | 16.1 | 17.6 | 17 |
| | H | 19.8 | 19.7 | 19.5 | 19 | 18.7 | 20 |
| Daily body weight gain (g) | | | | | | | |
| d0 to d7 | L | 69[b] | 49[ab] | 48[ab] | 16[a] | 55[ab] | 53[ab] |
| | H | 54 | 59 | 49 | 26 | 42 | 44 |
| d7 to d14 | L | 146 | 157 | 154 | 164 | 172 | 196 |
| | H | 187 | 205 | 188 | 170 | 191 | 181 |
| d14 to d35 | L | 460 | 488 | 466 | 450 | 506 | 472 |
| | H | 533 | 527 | 523 | 518 | 485 | 550 |
| d0 to d35 | L | 319 | 334 | 320 | 306 | 349 | 333 |
| | H | 368 | 369 | 361 | 350 | 338 | 375 |
| Average feed intake (g) | | | | | | | |
| d0 to d7 | L | 101 | 92 | 104 | 87 | 98 | 106 |
| | H | 95 | 140 | 105 | 87 | 98 | 116 |
| d7 to d14 | L | 231 | 240 | 227 | 236 | 248 | 253 |
| | H | 264 | 272 | 281 | 228 | 242 | 277 |
| d14 to d35 | L | 623 | 586 | 568 | 573 | 606 | 599 |
| | H | 638 | 656 | 657 | 633 | 593 | 709 |
| d0 to d35 | L | 440 | 418 | 407 | 409 | 433 | 431 |
| | H | 454 | 476 | 471 | 443 | 424 | 504 |

(continued)

| Feed efficiency (gain kg/feed kg) | | | | | | | |
|---|---|---|---|---|---|---|---|
| d0 to d7 | L | 0.57 | 0.5 | 0.51 | 0.38 | 0.61 | 0.52 |
| | H | 0.48 | 0.42 | 0.59 | 0.73 | 0.44 | 0.34 |
| d7 to d14 | L | 0.69 | 0.63 | 0.63 | 0.76 | 0.67 | 0.77 |
| | H | 0.7 | 0.64 | 0.65 | 0.79 | 0.79 | 0.83 |
| d14 to d35 | L | 0.77 | 0.84 | 0.82 | 0.81 | 0.84 | 0.79 |
| | H | 0.81 | 0.82 | 0.8 | 0.82 | 0.82 | 0.8 |
| d0 to d35 | L | 0.75 | 0.81 | 0.81 | 0.79 | 0.8 | 0.77 |
| | H | 0.78 | 0.77 | 0.77 | 0.81 | 0.8 | 0.78 |
| Average Leu intake (g) | | | | | | | |
| d0 to d7 | L | 1.11 | 1.47 | 1.66 | 1.83 | 2.06 | 1.70 |
| | H | 1.05 | 2.24 | 1.68 | 1.83 | 2.06 | 1.86 |
| d7 to d14 | L | 2.54 | 2.64 | 3.63 | 2.60 | 5.21 | 4.05 |
| | H | 2.90 | 2.99 | 4.50 | 2.51 | 5.08 | 4.43 |
| d14 to d35 | L | 6.85 | 6.45 | 6.25 | 6.30 | 6.67 | 6.59 |
| | H | 7.02 | 7.22 | 7.23 | 6.96 | 6.52 | 7.80 |
| d0 to d35 | L | 10.51 | 10.56 | 11.54 | 10.73 | 13.93 | 12.33 |
| | H | 10.97 | 12.45 | 13.40 | 11.30 | 13.66 | 14.09 |
| Average BCAA intake (g) | | | | | | | |
| d0 to d7 | L | 2.48 | 3.28 | 3.71 | 4.07 | 4.59 | 3.78 |
| | H | 2.33 | 5.00 | 3.75 | 4.07 | 4.59 | 4.14 |
| d7 to d14 | L | 5.67 | 5.89 | 8.10 | 5.79 | 11.61 | 9.03 |
| | H | 6.48 | 6.67 | 10.03 | 5.59 | 11.33 | 9.88 |
| d14 to d35 | L | 15.28 | 14.37 | 13.93 | 14.06 | 14.87 | 14.69 |
| | H | 15.65 | 16.09 | 16.12 | 15.53 | 14.55 | 17.39 |
| d0 to d35 | L | 23.43 | 23.54 | 25.74 | 23.92 | 31.07 | 27.50 |
| | H | 24.46 | 27.76 | 29.89 | 25.19 | 30.47 | 31.41 |
| Degree of separation S | | | | | | | |
| d0 | | 1.26 | 1.27 | 1.27 | 1.27 | 1.27 | 1.27 |
| d7 | | 1.22 | 1.26 | 1.25 | 1.28 | 1.23 | 1.23 |
| d14 | | 1.24 | 1.28 | 1.25 | 1.23 | 1.22 | 1.18 |
| d35 | | 1.19 | 1.16 | 1.18 | 1.18 | 1.06 | 1.17 |
| ΔS (S on d0 - S on d35) | | 0.07 | 0.12 | 0.09 | 0.09 | 0.22 | 0.10 |
| a, b, c: Different superscript letters indicate statistically significant differences ($P < 0.05$) | | | | | | | |

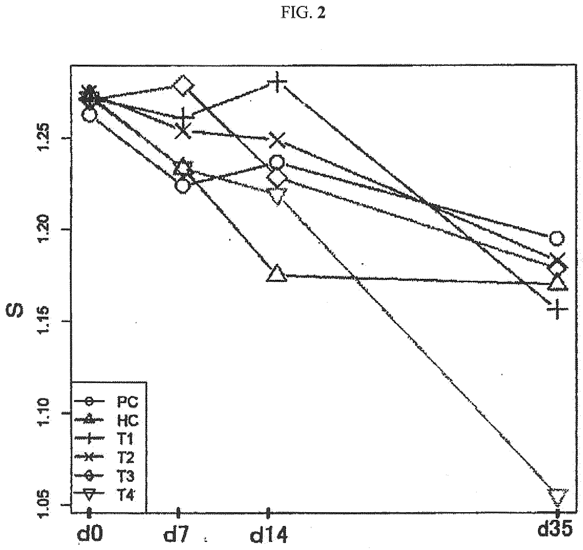

When an analysis of the body weight distribution of the pig group in which the H group and the L group were combined was carried out, the numerical value of the degree of separation S on day 0 after weaning (d0) was large in each section and the H group and the L group were clearly separated, however, on day 35 after weaning (d35), in T4, the numerical value of the degree of separation S decreased as compared with PC or HC. That is, it was confirmed that merger of body weights in the H group and the L group proceeds and the body weights come closer to uniformity (Table 3, and FIGS. 1 and 2). In addition, also ΔS was 0.22 which was about two times or more larger than that in the other test sections.

Further, when it was confirmed whether a statistically significant difference exists in the average body weights

between the H group and the L group in the respective test feed sections, it was confirmed that the difference is no longer significant only on day 35 after weaning (d35) in T4 (PC: $p = 7.76 \times 10^{-10}$, T4: $p = 8.19 \times 10^{-2}$).

Therefore, it was found that by ingesting the feed designed so as to contain the branched-chain amino acids in an amount 1.7 times or more the required amount specified by NRC (2012) continually for 2 weeks or more immediately after weaning, the degree of separation of the body weights in the pig group can be reduced.

Example 2

100 Piglets at the age of 24 days immediately after weaning (on day 0 after weaning: d0) were randomly divided into 10 groups (10 piglets/pen), and acclimated for 7 days with common feed that satisfies the required amount specified by NRC (2012). Note that in Example 2, raising by physically dividing piglets into sections for each of the group composed of piglets whose body weight is higher than the average body weight (H group) and the group composed of piglets whose body weight is lower than the average body weight (L group) at the start of supply of the feed of the present invention as in Example 1 was not carried out. From day 7 after weaning (d7), the following 5 types of feed compositions were supplied separately for two groups continually for 3 weeks in total (from d7 to d28) by adding the feed twice in the morning and evening while confirming the residual feed so that the feed does not run out. The formulations of the respective feed compositions are shown in Table 4.

[Feed Composition]

- · Feed composition 2-1: containing BCAA in an amount 0.86 times the required amount specified by NRC (2012), Leu/Val = 1.10, Leu/Ile = 1.37
- · Feed composition 2-2: containing BCAA in an amount 0.93 times the required amount specified by NRC (2012), Leu/Val = 1.33, Leu/Ile = 1.66
- · Feed composition 2-3: containing BCAA in an amount 1.00 times the required amount specified by NRC (2012), Leu/Val = 1.57, Leu/Ile = 1.96
- · Feed composition 2-4 (the embodiment of the present invention): containing BCAA in an amount 1.07 times the required amount specified by NRC (2012), Leu/Val = 1.81, Leu/Ile = 2.25
- · Feed composition 2-5 (the embodiment of the present invention): containing BCAA in an amount 1.14 times the required amount specified by NRC (2012), Leu/Val = 2.04, Leu/Ile = 2.54

[Table 4]

Table 4

| Ingredient | Feed composition 2-1 | Feed composition 2-2 | Feed composition 2-3 | Feed composition 2-4 | Feed composition 2-5 |
|---|---|---|---|---|---|
| Wheat, soft | 63.00 | 63.00 | 63.00 | 63.00 | 63.00 |
| Barley | 10.58 | 10.58 | 10.58 | 10.58 | 10.58 |
| Whey, sweet, dehydrated, skimmed | 10.00 | 10.00 | 10.00 | 10.00 | 10.00 |
| Soybean meal 48 | 5.00 | 5.00 | 5.00 | 5.00 | 5.00 |
| Starch, maize | 3.05 | 3.05 | 3.05 | 3.05 | 3.05 |
| Calcium carbonate | 1.00 | 1.00 | 1.00 | 1.00 | 1.00 |
| Vegetable oil | 2.00 | 2.00 | 2.00 | 2.00 | 2.00 |
| Monocalcium phosphate | 1.25 | 1.25 | 1.25 | 1.25 | 1.25 |
| L-Lysine HCl | 0.77 | 0.77 | 0.77 | 0.77 | 0.77 |
| Sodium chloride | 0.45 | 0.45 | 0.45 | 0.45 | 0.45 |

(continued)

| Ingredient | | Feed composition 2-1 | Feed composition 2-2 | Feed composition 2-3 | Feed composition 2-4 | Feed composition 2-5 |
|---|---|---|---|---|---|---|
| L-Threonine | | 0.40 | 0.40 | 0.40 | 0.40 | 0.40 |
| DL-Methionine | | 0.31 | 0.31 | 0.31 | 0.31 | 0.31 |
| L-Valine | | 0.35 | 0.35 | 0.35 | 0.35 | 0.35 |
| L-Phenylalanine | | 0.15 | 0.15 | 0.15 | 0.15 | 0.15 |
| L-Histidine | | 0.11 | 0.11 | 0.11 | 0.11 | 0.11 |
| L-Tryptophan | | 0.13 | 0.13 | 0.13 | 0.13 | 0.13 |
| L-Isoleucine | | 0.19 | 0.19 | 0.19 | 0.19 | 0.19 |
| L-Tyrosine | | 0.15 | 0.15 | 0.15 | 0.15 | 0.15 |
| L-Leucine | | - | 0.16 | 0.31 | 0.46 | 0.61 |
| L-Aspartate | | 0.31 | 0.23 | 0.15 | 0.08 | - |
| L-Glutamate | | 0.30 | 0.22 | 0.15 | 0.07 | - |
| Premix (1er Age) | | 0.50 | 0.50 | 0.50 | 0.50 | 0.50 |
| Total | | 100 | 100 | 100 | 100 | 100 |
| Lys | | 1.35 | 1.35 | 1.35 | 1.35 | 1.35 |
| BCAA | Leu | 0.95 | 1.15 | 1.35 | 1.55 | 1.76 |
| | Ile | 0.69 | 0.69 | 0.69 | 0.69 | 0.69 |
| | Val | 0.86 | 0.86 | 0.86 | 0.86 | 0.86 |
| BCAA | | 2.50 | 2.70 | 2.90 | 3.10 | 3.31 |
| BCAA/NRC (7-11 kg) | | 0.86 | 0.93 | 1.0 | 1.07 | 1.14 |
| Leu/Ile | | 1.37 | 1.66 | 1.96 | 2.25 | 2.54 |
| Leu/Val | | 1.10 | 1.33 | 1.57 | 1.81 | 2.04 |
| Leu/NRC (7-11 kg) | | 0.70 | 0.85 | 1.0 | 1.15 | 1.30 |
| Val/NRC (7-11 kg) | | 1.0 | 1.0 | 1.0 | 1.0 | 1.0 |
| Ile/NRC (7-11 kg) | | 1.0 | 1.0 | 1.0 | 1.0 | 1.0 |
| Leu/Lys | | 0.70 | 0.85 | 1.0 | 1.15 | 1.30 |
| Ile/Lys | | 0.51 | 0.51 | 0.51 | 0.51 | 0.51 |
| Val/Lys | | 0.64 | 0.64 | 0.64 | 0.64 | 0.64 |

Further, every week from day 7 after weaning (d7) at which the ingestion of the feed composition was started, that is, at the respective time points: on day 14 (d14), day 21 (d21), and day 28 (d28) after weaning, the average body weight, daily body weight gain, average feed intake, feed efficiency, average Leu intake, and degree of separation S were calculated. The results are shown in Table 5.

[Table 5]

Table 5

| | Feed composition | | | | |
|---|---|---|---|---|---|
| | 2-1 | 2-2 | 2-3 | 2-4 | 2-5 |
| Average body weight (kg) | | | | | |
| On day 7 after weaning (d7) | 9.19 | 9.47 | 9.59 | 9.42 | 9.53 |
| On day 14 after weaning (d14) | 11.22 | 12.34 | 12.4 | 12.31 | 12.41 |
| On day 21 after weaning (d21) | 13.42[a] | 15.43[ab] | 16.16[b] | 15.90[ab] | 15.96[ab] |
| On day 28 after weaning (d28) | 16.22[a] | 19.64[b] | 20.95[b] | 21.04[b] | 20.36[b] |
| Daily body weight gain (g) | | | | | |
| d7 to d14 | 290.3[a] | 409.3[ab] | 401.1[ab] | 412.4[b] | 410.8[ab] |
| d14 to d21 | 313.7[a] | 442.3[b] | 536.2[b] | 512.6[b] | 507.3[b] |
| d21 to d28 | 400.8[a] | 600.9[b] | 685.4[b] | 734.1[b] | 629.0[b] |
| d7 to d28 | 334.9[a] | 484.2[b] | 540.9[b] | 553.0[b] | 515.7[b] |
| Average feed intake (g) | | | | | |
| d7 to d14 | 473.4 | 595.7 | 551.7 | 570.5 | 598.2 |
| d14 to d21 | 546.8[a] | 771.8[b] | 761.8[b] | 766.3[b] | 786.7[b] |
| d21 to d28 | 679.0[a] | 978.7[b] | 995.7[b] | 1038[b] | 988.2[b] |
| d7 to d28 | 566.4[a] | 782.1[b] | 769.7[b] | 791.6[b] | 791.1[b] |
| Feed efficiency (gain kg/feed kg) | | | | | |
| d7 to d28 | 0.591 | 0.619 | 0.703 | 0.699 | 0.652 |
| Average Leu intake (g) | | | | | |
| d7 to d14 | 4.166 | 6.195 | 6.510 | 7.588 | 8.853 |
| d14 to d21 | 4.812 | 8.027 | 8.989 | 10.192 | 11.643 |
| d21 to d28 | 5.975 | 10.178 | 11.749 | 13.805 | 14.625 |
| d7 to d28 | 4.984 | 8.134 | 9.082 | 10.528 | 11.708 |
| Degree of separation S | | | | | |
| d7 | 1.366 | 1.490 | 1.364 | 1.446 | 1.335 |
| d14 | 1.372 | 1.485 | 1.344 | 1.383 | 1.279 |
| d21 | 1.375 | 1.455 | 1.369 | 1.380 | 1.256 |
| d28 | 1.347 | 1.439 | 1.341 | 1.312 | 1.207 |
| ΔS (S on d7 - S on d28) | 0.019 | 0.052 | 0.023 | 0.134 | 0.128 |

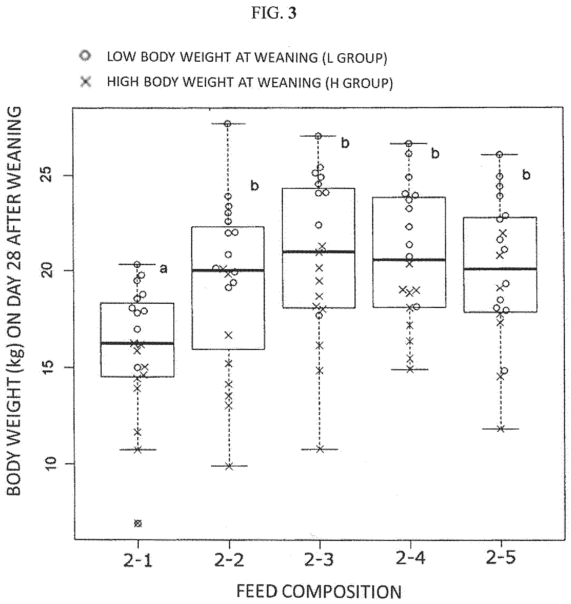

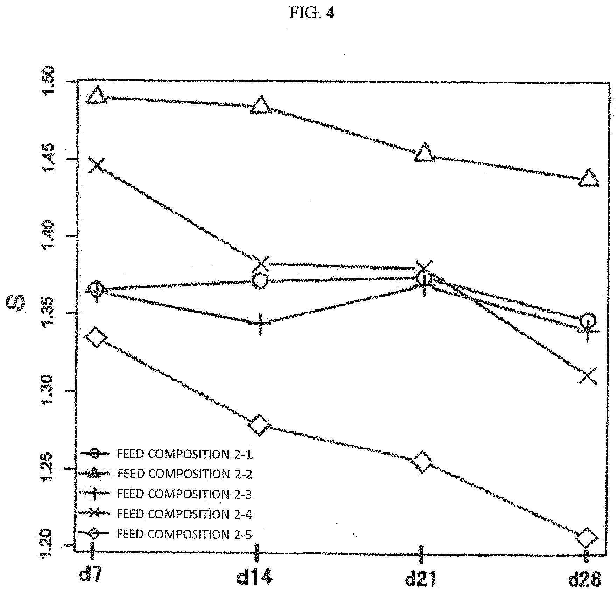

When the pigs were divided into two groups at the average of the body weight of the pigs at the start of supply of the feed composition (d7) as a boundary and the change in the body weight was tracked, it was observed that in the section in which the feed composition 2-4 was supplied on d28 and in the section in which the feed composition 2-5 was supplied on d28, merger of the pigs whose initial body weight was lower than the average and the pigs whose initial body weight was higher than the average is promoted as compared with the other test sections (Table 5 and FIG. 3). In FIG. 4, as shown in the following formula (1), the ratio of the average body weight of the pigs whose initial body weight was higher than the average to the average body weight of the pigs whose initial body weight was lower than the average (dispersion index S) was determined, and the chronological change thereof is shown. It was confirmed that in the section in which the feed composition 2-4 was supplied and in the section in which the feed composition 2-5 was supplied, the dispersion index S decreased over time until day 21 and approximately approached 1. Further, it was confirmed that in the case of the feed compositions 2-4 and 2-5, ΔS is large as compared with the other feed compositions 2-1 to 2-3, and the uniformity in the pig group has increased.

Further, when the pigs whose initial average body weight was low and the pigs whose initial average body weight

was high in the respective test feed sections were compared, although a statistically significant difference still exists, it was confirmed that in the section in which the feed composition 2-5 was supplied, the p value on day 21 has significantly increased (feed composition 2-3: $p = 3.04 \times 10^{-4}$, feed composition 2-5: $p = 4.41 \times 10^{-2}$). These results indicate that the supply of Leu in an amount equal to or more than the required amount has an effect of making the pig group uniform without decreasing the growth of the piglets.

Based on the above results, it was found that by ingesting feed designed so as to contain branched-chain amino acids in an amount 1.0 times or more the required amount per feed specified by NRC (2012), and contain leucine in an amount 1.6 times or more the amount of valine, and 2.0 times or more the amount of isoleucine continually for 2 weeks or more immediately after weaning, the uniformity of the body weights in the pig group can be increased.

## Claims

**1.** A method for increasing the uniformity of the body weights in one or more pig groups composed of a plurality of pigs immediately after weaning, comprising:

allowing feed to be ingested continually for 2 weeks or more immediately after weaning in one or more pig groups composed of a plurality of pigs immediately after weaning,
wherein
when the average body weight of pigs immediately after weaning is 5 kg or more and less than 7 kg, the feed contains leucine in an amount of 2.55 mass% or more, valine in an amount of 1.62 mass% or more, and isoleucine in an amount of 1.31 mass% or more;
when the average body weight of pigs immediately after weaning is 7 kg or more and less than 11 kg, the feed contains leucine in an amount of 2.30 mass% or more, valine in an amount of 1.46 mass% or more, and isoleucine in an amount of 1.17 mass% or more; and
when the average body weight of pigs immediately after weaning is 11 kg or more and less than 25 kg, the feed contains leucine in an amount of 2.09 mass% or more, valine in an amount of 1.33 mass% or more, and isoleucine in an amount of 1.07 mass% or more;
or
when the average body weight of pigs immediately after weaning is 5 kg or more and less than 7 kg, the feed contains the branched-chain amino acids leucine, valine, and isoleucine in an amount of 3.22 mass% or more, and contains leucine in an amount 1.6 times or more the amount of valine, and 2.0 times or more the amount of isoleucine;
when the average body weight of pigs immediately after weaning is 7 kg or more and less than 11 kg, the feed contains the branched-chain amino acids leucine, valine, and isoleucine in an amount of 2.90 mass% or more, and contains leucine in an amount 1.6 times or more the amount of valine, and 2.0 times or more the amount of isoleucine; and
when the average body weight of pigs immediately after weaning is 11 kg or more and less than 25 kg, the feed contains the branched-chain amino acids leucine, valine, and isoleucine in an amount of 2.64 mass% or more, and contains leucine in an amount 1.6 times or more the amount of valine, and 2.0 times or more the amount of isoleucine.

**2.** A method for raising pigs, comprising:

allowing feed to be ingested continually for 2 weeks or more immediately after weaning in one or more pig groups composed of a plurality of pigs immediately after weaning,
wherein
when the average body weight of pigs immediately after weaning is 5 kg or more and less than 7 kg, the feed contains leucine in an amount of 2.55 mass% or more, valine in an amount of 1.62 mass% or more, and isoleucine in an amount of 1.31 mass% or more;
when the average body weight of pigs immediately after weaning is 7 kg or more and less than 11 kg, the feed contains leucine in an amount of 2.30 mass% or more, valine in an amount of 1.46 mass% or more, and isoleucine in an amount of 1.17 mass% or more; and
when the average body weight of pigs immediately after weaning is 11 kg or more and less than 25 kg, the feed contains leucine in an amount of 2.09 mass% or more, valine in an amount of 1.33 mass% or more, and isoleucine in an amount of 1.07 mass% or more;
or
when the average body weight of pigs immediately after weaning is 5 kg or more and less than 7 kg, the feed

contains the branched-chain amino acids leucine, valine, and isoleucine in an amount of 3.22 mass% or more, and contains leucine in an amount 1.6 times or more the amount of valine, and 2.0 times or more the amount of isoleucine;
when the average body weight of pigs immediately after weaning is 7 kg or more and less than 11 kg, the feed contains the branched-chain amino acids leucine, valine, and isoleucine in an amount of 2.90 mass% or more, and contains leucine in an amount 1.6 times or more the amount of valine, and 2.0 times or more the amount of isoleucine; and
when the average body weight of pigs immediately after weaning is 11 kg or more and less than 25 kg, the feed contains the branched-chain amino acids leucine, valine, and isoleucine in an amount of 2.64 mass% or more, and contains leucine in an amount 1.6 times or more the amount of valine, and 2.0 times or more the amount of isoleucine.

**3.** A feed composition for pigs whose average body weight immediately after weaning is 5 kg or more and less than 7 kg, comprising leucine in an amount of 2.55 mass% or more, valine in an amount of 1.62 mass% or more, and isoleucine in an amount of 1.31 mass% or more;

a feed composition for pigs whose average body weight immediately after weaning is 7 kg or more and less than 11 kg, comprising leucine in an amount of 2.30 mass% or more, valine in an amount of 1.46 mass% or more, and isoleucine in an amount of 1.17 mass% or more; or
a feed composition for pigs whose average body weight immediately after weaning is 11 kg or more and less than 25 kg, comprising leucine in an amount of 2.09 mass% or more, valine in an amount of 1.33 mass% or more, and isoleucine in an amount of 1.07 mass% or more,
wherein the feed composition is to be ingested continually for 2 weeks or more immediately after weaning by one or more pig groups composed of a plurality of pigs immediately after weaning.

**4.** A method for producing a feed composition for pigs to be ingested continually for 2 weeks or more immediately after weaning, comprising:

a step of adding the branched-chain amino acids leucine, valine, and isoleucine to a feed raw material so as to contain
leucine in an amount of 2.55 mass% or more, valine in an amount of 1.62 mass% or more, and isoleucine in an amount of 1.31 mass% or more, when the average body weight of pigs immediately after weaning is 5 kg or more and less than 7 kg;
leucine in an amount of 2.30 mass% or more, valine in an amount of 1.46 mass% or more, and isoleucine in an amount of 1.17 mass% or more, when the average body weight of pigs immediately after weaning is 7 kg or more and less than 11 kg; and
leucine in an amount of 2.09 mass% or more, valine in an amount of 1.33 mass% or more, and isoleucine in an amount of 1.07 mass% or more, when the average body weight of pigs immediately after weaning is 11 kg or more and less than 25 kg.

## Patentansprüche

**1.** Verfahren zur Erhöhung der Einheitlichkeit der Körpergewichte in einer oder mehreren Schweinegruppen, die aus einer Vielzahl von Schweinen unmittelbar nach dem Entwöhnen bestehen, umfassend:

Zulassen, dass Futter kontinuierlich für 2 Wochen oder länger unmittelbar nach dem Entwöhnen in einer oder mehreren Schweinegruppen aufgenommen wird, die aus einer Vielzahl von Schweinen unmittelbar nach dem Entwöhnen bestehen,
wobei
wenn das durchschnittliche Körpergewicht von Schweinen unmittelbar nach dem Entwöhnen 5 kg oder mehr und weniger als 7 kg beträgt, das Futter Leucin in einer Menge von 2,55 Masse-% oder mehr, Valin in einer Menge von 1,62 Masse-% oder mehr und Isoleucin in einer Menge von 1,31 Masse-% oder mehr enthält;
wenn das durchschnittliche Körpergewicht von Schweinen unmittelbar nach dem Entwöhnen 7 kg oder mehr und weniger als 11 kg beträgt, das Futter Leucin in einer Menge von 2,30 Masse-% oder mehr, Valin in einer Menge von 1,46 Masse-% oder mehr und Isoleucin in einer Menge von 1,17 Masse-% oder mehr enthält; und
wenn das durchschnittliche Körpergewicht von Schweinen unmittelbar nach dem Entwöhnen 11 kg oder mehr und weniger als 25 kg beträgt, das Futter Leucin in einer Menge von 2,09 Masse-% oder mehr, Valin in einer

Menge von 1,33 Masse-% oder mehr und Isoleucin in einer Menge von 1,07 Masse-% oder mehr enthält;
oder
wenn das durchschnittliche Körpergewicht von Schweinen unmittelbar nach dem Entwöhnen 5 kg oder mehr und weniger als 7 kg beträgt, das Futter die verzweigtkettigen Aminosäuren Leucin, Valin und Isoleucin in einer Menge von 3,22 Masse-% oder mehr enthält und Leucin in einer Menge enthält, die das 1,6-fache oder mehr der Menge an Valin und das 2,0-fache oder mehr der Menge an Isoleucin beträgt;
wenn das durchschnittliche Körpergewicht von Schweinen unmittelbar nach dem Entwöhnen 7 kg oder mehr und weniger als 11 kg beträgt, das Futter die verzweigtkettigen Aminosäuren Leucin, Valin und Isoleucin in einer Menge von 2,90 Masse-% oder mehr enthält und Leucin in einer Menge enthält, die das 1,6-fache oder mehr der Menge an Valin und das 2,0-fache oder mehr der Menge an Isoleucin beträgt; und
wenn das durchschnittliche Körpergewicht von Schweinen unmittelbar nach dem Entwöhnen 11 kg oder mehr und weniger als 25 kg beträgt, das Futter die verzweigtkettigen Aminosäuren Leucin, Valin und Isoleucin in einer Menge von 2,64 Masse-% oder mehr enthält und Leucin in einer Menge enthält, die das 1,6-fache oder mehr der Menge an Valin und das 2,0-fache oder mehr der Menge an Isoleucin beträgt.

**2.** Verfahren zur Aufzucht von Schweinen, umfassend:

Zulassen, dass Futter kontinuierlich für 2 Wochen oder länger unmittelbar nach dem Entwöhnen in einer oder mehreren Schweinegruppen aufgenommen wird, die aus einer Vielzahl von Schweinen unmittelbar nach dem Entwöhnen bestehen,
wobei
wenn das durchschnittliche Körpergewicht von Schweinen unmittelbar nach dem Entwöhnen 5 kg oder mehr und weniger als 7 kg beträgt, das Futter Leucin in einer Menge von 2,55 Masse-% oder mehr, Valin in einer Menge von 1,62 Masse-% oder mehr und Isoleucin in einer Menge von 1,31 Masse-% oder mehr enthält;
wenn das durchschnittliche Körpergewicht von Schweinen unmittelbar nach dem Entwöhnen 7 kg oder mehr und weniger als 11 kg beträgt, das Futter Leucin in einer Menge von 2,30 Masse-% oder mehr, Valin in einer Menge von 1,46 Masse-% oder mehr und Isoleucin in einer Menge von 1,17 Masse-% oder mehr enthält; und
wenn das durchschnittliche Körpergewicht von Schweinen unmittelbar nach dem Entwöhnen 11 kg oder mehr und weniger als 25 kg beträgt, das Futter Leucin in einer Menge von 2,09 Masse-% oder mehr, Valin in einer Menge von 1,33 Masse-% oder mehr und Isoleucin in einer Menge von 1,07 Masse-% oder mehr enthält;
oder
wenn das durchschnittliche Körpergewicht von Schweinen unmittelbar nach dem Entwöhnen 5 kg oder mehr und weniger als 7 kg beträgt, das Futter die verzweigtkettigen Aminosäuren Leucin, Valin und Isoleucin in einer Menge von 3,22 Masse-% oder mehr enthält und Leucin in einer Menge enthält, die das 1,6-fache oder mehr der Menge an Valin und das 2,0-fache oder mehr der Menge an Isoleucin beträgt;
wenn das durchschnittliche Körpergewicht von Schweinen unmittelbar nach dem Entwöhnen 7 kg oder mehr und weniger als 11 kg beträgt, das Futter die verzweigtkettigen Aminosäuren Leucin, Valin und Isoleucin in einer Menge von 2,90 Masse-% oder mehr enthält und Leucin in einer Menge enthält, die das 1,6-fache oder mehr der Menge an Valin und das 2,0-fache oder mehr der Menge an Isoleucin beträgt; und
wenn das durchschnittliche Körpergewicht von Schweinen unmittelbar nach dem Entwöhnen 11 kg oder mehr und weniger als 25 kg beträgt, das Futter die verzweigtkettigen Aminosäuren Leucin, Valin und Isoleucin in einer Menge von 2,64 Masse-% oder mehr enthält und Leucin in einer Menge enthält, die das 1,6-fache oder mehr der Menge an Valin und das 2,0-fache oder mehr der Menge an Isoleucin beträgt.

**3.** Futterzusammensetzung für Schweine, deren durchschnittliches Körpergewicht unmittelbar nach dem Entwöhnen 5 kg oder mehr und weniger als 7 kg beträgt, umfassend Leucin in einer Menge von 2,55 Masse-% oder mehr, Valin in einer Menge von 1,62 Masse-% oder mehr und Isoleucin in einer Menge von 1,31 Masse-% oder mehr;

Futterzusammensetzung für Schweine, deren durchschnittliches Körpergewicht unmittelbar nach dem Entwöhnen 7 kg oder mehr und weniger als 11 kg beträgt, umfassend Leucin in einer Menge von 2,30 Masse-% oder mehr, Valin in einer Menge von 1,46 Masse-% oder mehr und Isoleucin in einer Menge von 1,17 Masse-% oder mehr; oder
Futterzusammensetzung für Schweine, deren durchschnittliches Körpergewicht unmittelbar nach dem Entwöhnen 11 kg oder mehr und weniger als 25 kg beträgt, umfassend Leucin in einer Menge von 2,09 Masse-% oder mehr, Valin in einer Menge von 1,33 Masse-% oder mehr und Isoleucin in einer Menge von 1,07 Masse-% oder mehr,
wobei die Futterzusammensetzung kontinuierlich für 2 Wochen oder länger unmittelbar nach dem Entwöhnen von einer oder mehreren Schweinegruppen aufgenommen werden soll, die aus einer Vielzahl von Schweinen

unmittelbar nach dem Entwöhnen bestehen.

4. Verfahren zur Herstellung einer Futterzusammensetzung für Schweine, die kontinuierlich für 2 Wochen oder länger unmittelbar nach dem Entwöhnen aufgenommen werden soll, umfassend:

einen Schritt des Hinzufügens der verzweigtkettigen Aminosäuren Leucin, Valin und Isoleucin zu einem Futterrohstoff, um
Leucin in einer Menge von 2,55 Masse-% oder mehr, Valin in einer Menge von 1,62 Masse-% oder mehr und Isoleucin in einer Menge von 1,31 Masse-% oder mehr zu enthalten, wenn das durchschnittliche Körpergewicht von Schweinen unmittelbar nach dem Entwöhnen 5 kg oder mehr und weniger als 7 kg beträgt;
Leucin in einer Menge von 2,30 Masse-% oder mehr, Valin in einer Menge von 1,46 Masse-% oder mehr und Isoleucin in einer Menge von 1,17 Masse-% oder mehr zu enthalten, wenn das durchschnittliche Körpergewicht von Schweinen unmittelbar nach dem Entwöhnen 7 kg oder mehr und weniger als 11 kg beträgt; und
Leucin in einer Menge von 2,09 Masse-% oder mehr, Valin in einer Menge von 1,33 Masse-% oder mehr und Isoleucin in einer Menge von 1,07 Masse-% oder mehr zu enthalten, wenn das durchschnittliche Körpergewicht von Schweinen unmittelbar nach dem Entwöhnen 11 kg oder mehr und weniger als 25 kg beträgt.

**Revendications**

1. Procédé visant à accroître l'uniformité des poids corporels dans un ou plusieurs groupes de porcs composés d'une pluralité de porcs immédiatement après le sevrage, comprenant :

permettre l'ingestion continue d'aliments pendant 2 semaines ou plus immédiatement après le sevrage dans un ou plusieurs groupes de porcs composés d'une pluralité de porcs immédiatement après le sevrage,
dans lequel
lorsque le poids corporel moyen des porcs immédiatement après le sevrage est de 5 kg ou plus et inférieur à 7 kg, l'aliment contient de la leucine en une quantité de 2,55 % en masse ou plus, de la valine en une quantité de 1,62 % en masse ou plus, et de l'isoleucine en une quantité de 1,31 % en masse ou plus ;
lorsque le poids corporel moyen des porcs immédiatement après le sevrage est de 7 kg ou plus et inférieur à 11 kg, l'aliment contient de la leucine en une quantité de 2,30 % en masse ou plus, de la valine en une quantité de 1,46 % en masse ou plus, et de l'isoleucine en une quantité de 1,17 % en masse ou plus ; et
lorsque le poids moyen des porcs immédiatement après le sevrage est de 11 kg ou plus et inférieur à 25 kg, l'aliment contient de la leucine en une quantité de 2,09 % en masse ou plus, de la valine en une quantité de 1,33 % en masse ou plus, et de l'isoleucine en une quantité de 1,07 % en masse ou plus ;
ou
lorsque le poids moyen des porcs immédiatement après le sevrage est de 5 kg ou plus et inférieur à 7 kg, l'aliment contient les acides aminés à chaîne ramifiée leucine, valine et isoleucine en une quantité de 3,22 % en masse ou plus, et contient de la leucine en une quantité 1,6 fois supérieure ou plus à la quantité de valine, et 2,0 fois supérieure ou plus à la quantité d'isoleucine ;
lorsque le poids moyen des porcs immédiatement après le sevrage est de 7 kg ou plus et inférieur à 11 kg, l'aliment contient les acides aminés à chaîne ramifiée leucine, valine et isoleucine en une quantité de 2,90 % en masse ou plus, et contient de la leucine en une quantité 1,6 fois supérieure ou plus à celle de la valine, et 2,0 fois supérieure ou plus à celle de l'isoleucine ; et
lorsque le poids corporel moyen des porcs immédiatement après le sevrage est de 11 kg ou plus et inférieur à 25 kg, l'aliment contient les acides aminés à chaîne ramifiée leucine, valine et isoleucine en une quantité de 2,64 % en masse ou plus, et contient de la leucine en une quantité 1,6 fois supérieure ou plus à la quantité de valine, et 2,0 fois supérieure ou plus à la quantité d'isoleucine.

2. Procédé d'élevage de porcs, comprenant :

permettre l'ingestion continue d'aliments pendant 2 semaines ou plus immédiatement après le sevrage dans un ou plusieurs groupes de porcs composés d'une pluralité de porcs immédiatement après sevrage,
dans lequel
lorsque le poids corporel moyen des porcs immédiatement après le sevrage est de 5 kg ou plus et inférieur à 7 kg, l'aliment contient de la leucine en une quantité de 2,55 % en masse ou plus, de la valine en une quantité de 1,62 % en masse ou plus, et de l'isoleucine en une quantité de 1,31 % en masse ou plus ;
lorsque le poids corporel moyen des porcs immédiatement après le sevrage est de 7 kg ou plus et inférieur à 11 kg,

l'aliment contient de la leucine en une quantité de 2,30 % en masse ou plus, de la valine en une quantité de 1,46 % en masse ou plus, et de l'isoleucine en une quantité de 1,17 % en masse ou plus ; et
lorsque le poids moyen des porcs immédiatement après le sevrage est de 11 kg ou plus et inférieur à 25 kg, l'aliment contient de la leucine en une quantité de 2,09 % en masse ou plus, de la valine en une quantité de 1,33 % en masse ou plus, et de l'isoleucine en une quantité de 1,07 % en masse ou plus ;
ou
lorsque le poids moyen des porcs immédiatement après le sevrage est de 5 kg ou plus et inférieur à 7 kg, l'aliment contient les acides aminés à chaîne ramifiée leucine, valine et isoleucine en une quantité de 3,22 % en masse ou plus, et contient de la leucine en une quantité 1,6 fois supérieure ou plus à la quantité de valine, et 2,0 fois supérieure ou plus à la quantité d'isoleucine ;
lorsque le poids moyen des porcs immédiatement après le sevrage est de 7 kg ou plus et inférieur à 11 kg, l'aliment contient les acides aminés à chaîne ramifiée leucine, valine et isoleucine en une quantité de 2,90 % en masse ou plus, et contient de la leucine en une quantité 1,6 fois supérieure ou plus à celle de la valine, et 2,0 fois supérieure ou plus à celle de l'isoleucine ; et
lorsque le poids corporel moyen des porcs immédiatement après le sevrage est de 11 kg ou plus et inférieur à 25 kg, l'aliment contient les acides aminés à chaîne ramifiée leucine, valine et isoleucine en une quantité de 2,64 % en masse ou plus, et contient de la leucine en une quantité 1,6 fois supérieure ou plus à la quantité de valine, et 2,0 fois supérieure ou plus à la quantité d'isoleucine.

**3.** Une composition alimentaire pour porcs dont le poids moyen immédiatement après le sevrage est de 5 kg ou plus et inférieur à 7 kg, comprenant de la leucine en une quantité de 2,55 % en masse ou plus, de la valine en une quantité de 1,62 % en masse ou plus, et de l'isoleucine en une quantité de 1,31 % en masse ou plus ; ou

une composition alimentaire pour porcs dont le poids moyen immédiatement après le sevrage est de 7 kg ou plus et inférieur à 11 kg, comprenant de la leucine en une quantité de 2,30 % en masse ou plus, de la valine en une quantité de 1,46 % en masse ou plus, et de l'isoleucine en une quantité de 1,17 % en masse ou plus ; ou
une composition alimentaire pour porcs dont le poids moyen immédiatement après le sevrage est de 11 kg ou plus et inférieur à 25 kg, comprenant de la leucine en une quantité de 2,09 % en masse ou plus, de la valine en une quantité de 1,33 % en masse ou plus, et de l'isoleucine en une quantité de 1,07 % en masse ou plus,
laquelle composition alimentaire doit être ingérée de manière continue pendant 2 semaines ou plus immédiatement après le sevrage par un ou plusieurs groupes de porcs composés d'une pluralité de porcs immédiatement après le sevrage.

**4.** Procédé de fabrication d'une composition alimentaire pour porcs destinée à être ingérée de manière continue pendant 2 semaines ou plus immédiatement après le sevrage, comprenant :

une étape consistant à ajouter les acides aminés à chaîne ramifiée leucine, valine et isoleucine à une matière première d'aliment pour animaux de manière à ce qu'elle contienne
de la leucine en une quantité de 2,55 % en masse ou plus, de la valine en une quantité de 1,62 % en masse ou plus, et de l'isoleucine en une quantité de 1,31 % en masse ou plus, lorsque le poids corporel moyen des porcs immédiatement après le sevrage est de 5 kg ou plus et inférieur à 7 kg ;
de la leucine en une quantité de 2,30 % en masse ou plus, de la valine en une quantité de 1,46 % en masse ou plus et de l'isoleucine en une quantité de 1,17 % en masse ou plus, lorsque le poids corporel moyen des porcs immédiatement après le sevrage est de 7 kg ou plus et inférieur à 11 kg ; et
de la leucine en une quantité de 2,09 % en masse ou plus, de la valine en une quantité de 1,33 % en masse ou plus, et de l'isoleucine en une quantité de 1,07 % en masse ou plus, lorsque le poids corporel moyen des porcs immédiatement après le sevrage est de 11 kg ou plus et inférieur à 25 kg.

FIG. 1

(A)

LOW BODY WEIGHT AT WEANING (L GROUP)
HIGH BODY WEIGHT AT WEANING (H GROUP)
BODY WEIGHT (kg) AT WEANING
4
5
6
7
8
T1
T2
T3
T4
PC
HC

(B)

LOW BODY WEIGHT AT WEANING (L GROUP)
HIGH BODY WEIGHT AT WEANING (H GROUP)
BODY WEIGHT (kg) ON DAY 35 AFTER WEANING
10
15
20
25
T1
T2
T3
T4
PC
HC

FIG. 2

S
1.05
1.10
1.15
1.20
1.25
d0
d7
d14
d35
PC
HC
T1
T2
T3
T4

FIG. 3

LOW BODY WEIGHT AT WEANING (L GROUP)
HIGH BODY WEIGHT AT WEANING (H GROUP)
BODY WEIGHT (kg) ON DAY 28 AFTER WEANING
10
15
20
25
a
b
b
b
b
2-1
2-2
2-3
2-4
2-5
FEED COMPOSITION

FIG. 4

S
1.50
1.45
1.40
1.35
1.30
1.25
1.20
d7
d14
d21
d28
FEED COMPOSITION 2-1
FEED COMPOSITION 2-2
FEED COMPOSITION 2-3
FEED COMPOSITION 2-4
FEED COMPOSITION 2-5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- AU 2017211790 A1
- CN 108419938 A
- CN 105532568 A


### Non-patent literature cited in the description


- Advances in low-protein diets for swine. **YUMING WANG et al.** JOURNAL OF ANIMAL SCIENCE AND BIOTECHNOLOGY. BIOMED CENTRAL LTD, 19 July 2018, vol. 9, 1-14
- **WEN XU M. D.** Leucine improves growth performance of intrauterine growth retardation piglets by modifying gene and protein expression related to protein synthesis. *Nutrition*, 2016, vol. 32, 114-121
- Table 16-1 A Dietary Calcium, Phosphorus, and Amino Acid Requirements of Growing Pigs When Allowed Feed Ad Libitum (90% dry matter). the National Research Council Nutrient Requirements of Swine. NRC, 2012
- *NRC*, 2012